# EUROPEAN PATENT APPLICATION

(11) **EP 2 611 171 A1**
(43) Date of publication of application: **03.07.2013**
(21) Application number: 12197125.3
(22) Date of filing: 14.12.2012
(51) Int. Cl.: H04N 13/02

(54) **Device for acquiring stereoscopic images**

(30) Priority: 27.12.2011 EP 11306781
(71) Applicant: Thomson Licensing, 92130 Issy-les-Moulineaux (FR)
(72) Inventor: Drazic, Valter, 35576 Cesson-Sévigné (FR); Kerbiriou, Paul, 35576 Cesson-Sévigné (FR); Schubert, Arno, 35576 Cesson-Sévigné (FR)
(74) Representative: Browaeys, Jean-Philippe

(57) **Abstract**

The device is based on the Wheatstone principle. Mirrors (M1, M2, M3, M4) are adjusted angularly so that the right and left stereoscopic images of a scene are formed on a sensor in such a manner as to leave free an area (IR) between these two images. A slot is formed between the internal mirrors to let past, on the one hand, a structured or pulse light and, on the other, this structured or pulse light once it has been reflected on objects of the scene. The device further comprises an optic (AL) associated with the slot (S1) and the lens system (LS) to form an image on said area (IR) from said reflected structured or pulse light.

## Description

The present invention relates to a device for acquiring stereoscopic images.

The present invention is located in the field of stereoscopic image acquisition and more particularly in the one of the simultaneous acquisition of right and left images of a scene from a single image sensor.

One of the advantages of this type of acquisition device is that the colorimetry of the two images is the same owing to the use of a single sensor. Moreover, the complexity of implementing these devices is much less compared with that of acquisition devices that use several sensors such as current 3D cameras.

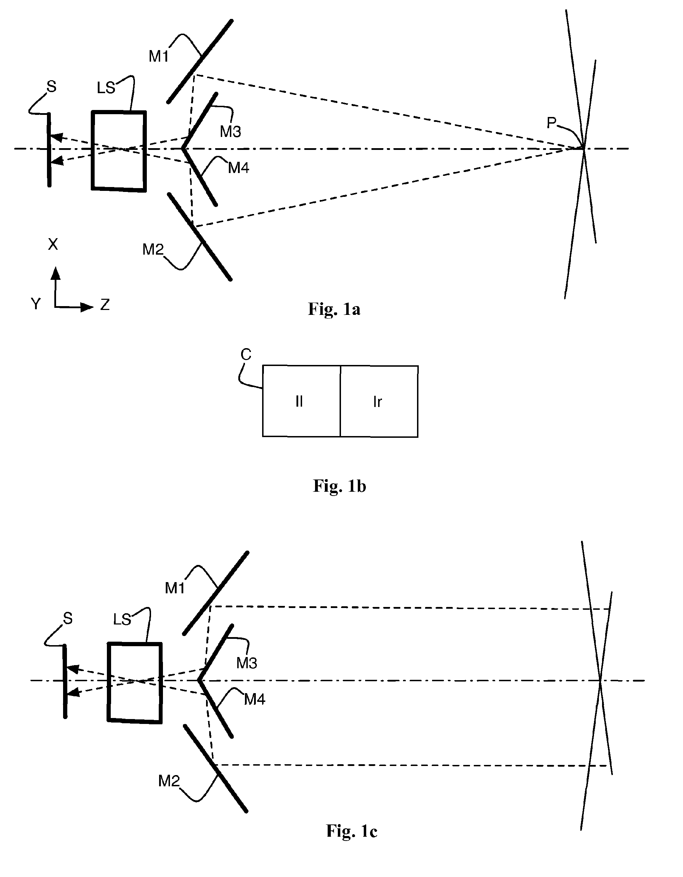

It is known image acquisition devices (comprising a single image sensor) that are based on the principle of the Wheatstone stereoscopy shown in Fig. 1a, 1b and 1c.

Fig. 1a diagrammatically shows such an acquisition device that comprises an image sensor S, external M1 and M2 and internal M3 andM4 mirrors that are angularly adjusted and associated with a lens system LS to form right Ir and left Il stereoscopic images of a scene on the sensor S. Hence, the light rays emitted from a point P of a scene, are projected onto the mirrors M1 and M2, then M3 and M4, crossing the lens system LS where they are focused to form two images Ir and Il on the sensor S. The mirrors M1 to M4 are adjusted angularly according to different angles of 45° to allow the right Ir and left Il images to be formed on two separate and joined areas of the sensor S (Fig. 1b).

Fig. 1c shows a variant of the device of Fig. 1a. This variant also allows the formation of images Ir et Il on two separate and joined areas of the sensor S but the separation between these two areas is less distinct than that of the device of Fig. 1a: the coverage area of these images is greater.

The use of mirrors in these stereoscopic acquisition devices causes geometric distortions of the images Ir and Il (*keystoning*)*.* These distortions are usually corrected before the use of these right and left images.

One of these uses is to calculate a disparity map, still called depth map, from images Ir and Il thus geometrically corrected.

However, the inventor has observed that this depth map calculation is not reliable in slightly textured image areas.

One of the solutions for making this calculation reliable in these areas is to include in the acquisition devices of stereoscopic images a depth map calculation device.

A first example of a known depth map calculation device, based on the emission and reception of a structured light, comprises a projector suitable to project a structured light onto the scene to capture, an image sensor suitable to capture the reflected image of this projection onto the scene, and means for calculating a depth map from the image thus captured.

A second example of a known depth map calculation device, based on the time of flight. The principle is to illuminate a scene with light pulses of very short duration and to measure the time for these light pulses to travel from their emission to their acquisition once these pulses have been reflected by an object of the scene. The depth of each pixel is then calculated according to this return travel time of the light rays. This device comprises a projector suitable to illuminate the scene by means of light pulses, an image sensor suitable to capture the image of this illumination of the scene and to measure, for each pixel of this image, the time shift between the departure of an illumination pulse of the projector and the return of rays from this pulse onto the sensor, and means for calculating a depth map from measurements of these time shifts.

The projector of structured or pulse light and the image sensor of these devices for calculating depth maps are distant from each other by an interpolation. This interpolation has either a single horizontal component that is expressed on the horizontal axis X of the image plane of the sensor, or a horizontal component along the X axis and a vertical component that is expressed on a Y axis of this image plane.

In the case of a depth map calculation device based on the emission and reception of a structured light, the depth of the pixels is estimated from a single image formed by projection on the object of a structured infrared light (WO2007105205). Indeed, as a distancing from a point of the scene, according to a Z axis perpendicular to the image plane, to engender a horizontal shift along the X axis, the measurement in the image of this shift along the X axis can determine the depth of each pixel of the image by comparing the infrared image acquired with a pattern positioned at a predetermined depth.

The introduction of a depth map calculation device in stereoscopic image acquisition devices thus leads, according to the prior art, to adding, among other things, a projector and a new image sensor in the stereoscopic image acquisition devices, which increases the size of these devices.

The problem resolved by the present invention is thus to make the calculation of a depth map of a single-sensor stereoscopic image acquisition device more reliable without for as much significantly increasing its size.

For this purpose, the present invention relates to a stereoscopic image acquisition device comprising a sensor, external and internal mirrors associated with a lens system to form right and left stereoscopic images of a scene on the sensor such as explained in relation to Fig. 1a-1c.

The device is **characterized in that**:
- the mirrors are adjusted angularly so that the right and left stereoscopic images are formed on the sensor so as to leave free an area between these two images,
- a slot is formed between the internal mirrors to let past, on the one hand, a structured or pulse light and, on the other, this structured or pulse light once it has been reflected on the objects of the scene, and
- the device further comprises an optic associated with the slot and the lens system to form an image on said area from said reflected structured or pulse light.

The present invention further relates to a device for acquiring stereoscopic images comprising:
a sensor,
external and internal mirrors adjusted angularly to form left and right stereoscopic images of a scene respectively on a first area and on a second area of a sensitive surface of the sensor through a lens system,
a projector suitable to project a spatially structured light onto said scene, or suitable to project light pulses onto said scene,
an optic associated with the lens system for the formation of an image of the scene coming from said projected light onto a third area of the sensitive surface of said sensor, inserted between said first area and said second area,
in the case of a projector suitable to project light pulses, measurement means, for each pixel of this captured image coming from said projected light, of the time shift between the departure of a light pulse from the projector and the return of this pulse onto said sensor,
means for calculating a depth map from this captured image coming from said projected light, via said measures of time shifts for each pixel of this captured image in the event of projected light pulses,
wherein a slot is formed between the internal mirrors to let pass, on the one hand, said light projected by the projector onto the scene, and, on the other, the light needed to form the image of the scene coming from said light projected onto said third area.

Preferably, said first, second and third areas are not overlapping. For instance when the projected light is IR light, it means that none of the IR sensitive pixels of the sensors are located is the same areas as the visible sensitive pixels R, G, B as disclosed in the document US2011/175983 (see fig. 3D). Even being not overlapping, these zones can be adjacent on the sensitive surface of the sensor.

Preferably, said optic associated with the lens system is also associated with the slot.

This modification of a classic device based on the Wheatstone principle can implement a method for calculating depth maps based on the emission of a spatially structured or pulse light without having to add another light sensor. The increase of the size of this device is therefore found to be greatly reduced.

Moreover, the device is particularly advantageous as it retains its simplicity of implementation while making the calculation of the depth map more reliable.

Indeed, the depth map calculation devices of the prior art have the disadvantage of providing depth maps with undefined areas that are due to instabilities in the detection of the light signals on the edges of the objects of a scene or even shadows due to the projection as illustrated in Fig. 2 and 3 in the case of the device of the international application WO2007105205.

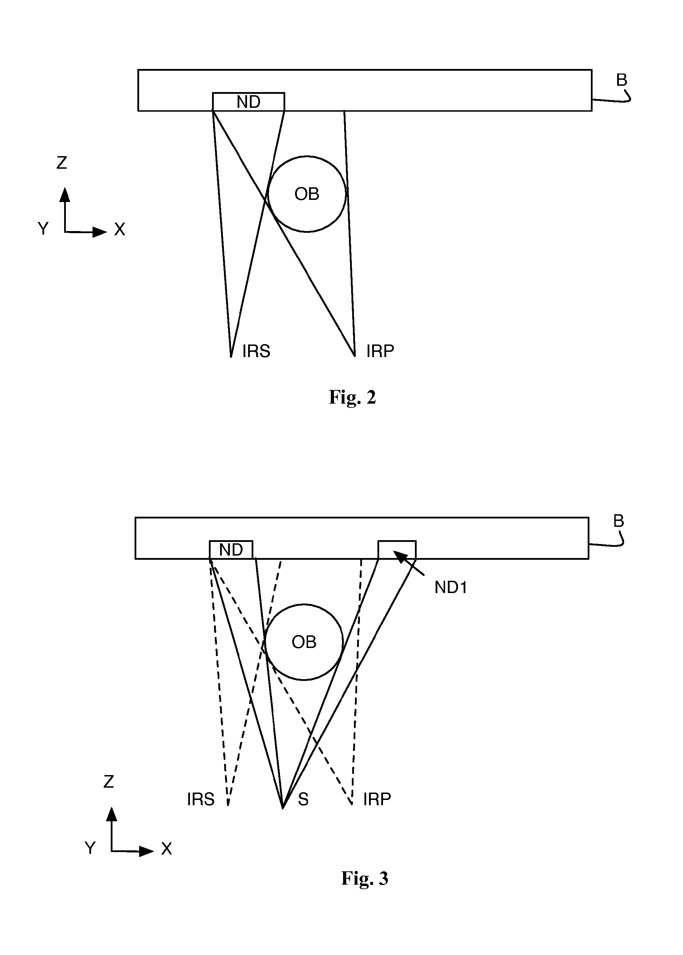

In Fig. 2 and 3, the scene is shown by a background B and an object OB located in front of this background. The depth map calculation device is formed from an infrared sensor IRS and a projector IRP.

The sensor IRS and the projector IRP are positioned on an axis parallel to the image plane of the sensor IRS and are offset from each other along the X axis. A non-defined area ND is then seen by the sensor IRS. This non-defined area ND corresponds to an area in which the depth of the pixels cannot be determined by the method based on a spatially structured or pulse light as this area is not lit by the infrared light projector but it is seen by the sensor IRS.

Fig. 3 illustrates the case in which the depth map calculation device is included in a stereoscopic image acquisition device that comprises, among other things, an image sensor S. This sensor S is positioned on the image plane of the sensor IRS between the sensor IRS and the projector IRP. As can be seen in Fig. 3, a non-defined area ND is thus seen by the sensor S. This non-defined area ND corresponds to an area in which the depth of the pixels cannot be determined by the method based on a spatially structured or pulse light as this area is not lit by the infrared light projector but it is seen by the sensor S. Another non-defined area ND1 is thus seen by the sensor S. This non-defined area ND1 corresponds to an area in which the depth of the pixels cannot be determined by the method based on the structured light as this area is not lit by the infrared light projector and is not seen by the sensor IRS.

The position of the sensor S and the projector IRP at a distance from each other along the axis X is thus not an adequate solution for minimising the areas of the image seen by the sensor S in which the depth of field cannot be defined.

Preferably, the optic associated with the lens system and the lens system have a common optical axis centred on the slot and on the third area of the sensitive surface of the sensor. Therefore, the third area is thus centred on the optical axis of the device, that is that the reflected structured light, coming from the illumination of the scene by the projected light, either acquired along an optical axis common to the optic associated with the lens system and to the lens system of the device passing by the slot, and not via another sensor offset horizontally (along the X axis) with respect to this optical axis. Advantageously, this preferable centring on the slot and on the third area can limit, on the one hand, the areas of the image in which the depth of field cannot be defined and, on the other, the instabilities of detection of light signals on the edges of objects of the scene. The reliability of the depth map is thus improved accordingly by this.

According to a preferential embodiment, the device thus comprises a projector of the structured or pulse light that is positioned in relation to the sensor so that the interpolation that separates them does not have a horizontal component. More precisely, the projector is arranged in such a manner that the straight line joining the centre of the third area of the sensitive surface of the sensor and the intersection of the projection axis of this projector with the plane of this sensitive surface does not have a horizontal component. In other words, the projector is placed preferentially above or below the centre of the sensor.

This embodiment is advantageous as this particular position of the projector in relation to the sensor limits still further the areas of the image in which the depth of field cannot be defined.

According to a variant relative to the case where the structured or pulse light is of the infrared type, the device further comprises a blocking filter of the visible light to filter the structured or pulse light that is reflected. In other words, this blocking filter of the visible light is positioned on the path of the light necessary to form the image of the scene coming from the light projected on the third area of the sensitive surface of the sensor.

According to a variant, the device also comprises an infrared blocking filter to filter the light that is intended to form the right and left images. In other words, this infrared blocking filter is positioned on the path of the light necessary to form the right and left stereoscopic images respectively on the first and second areas of the sensitive surface of the sensor.

These variants are advantageous as they enable the right, left and infrared images not to interfere with each other particularly on their edges, this facilitates the use of these images, and particularly the implementation of a method for calculating the depth map from the infrared image formed on the sensor.

The characteristics of the aforementioned invention, as well as others, will emerge more clearly upon reading the following description of an embodiment, said description made with reference to the drawings attached, wherein:
Fig. 1a-1c show an example of a stereoscopic image acquisition device according to the prior art.
Fig. 2 and 3 show illustrations of the image areas in which the depth of field cannot be defined.
Fig. 4 shows an embodiment of the stereoscopic image acquisition device according to the present invention.

The stereoscopic image acquisition device according to the present invention is a modified version of a device that uses the Wheatstone stereoscopy principle illustrated in Fig. 1a, 1b and 1c.

Indeed, the device, according to the present invention, comprises an image sensor S, external M1 and M2 and internal M3 and M4 images that are angularly adjusted and associated with a lens system LS to form right Ir and left Il stereoscopic images of a scene on the sensor S.

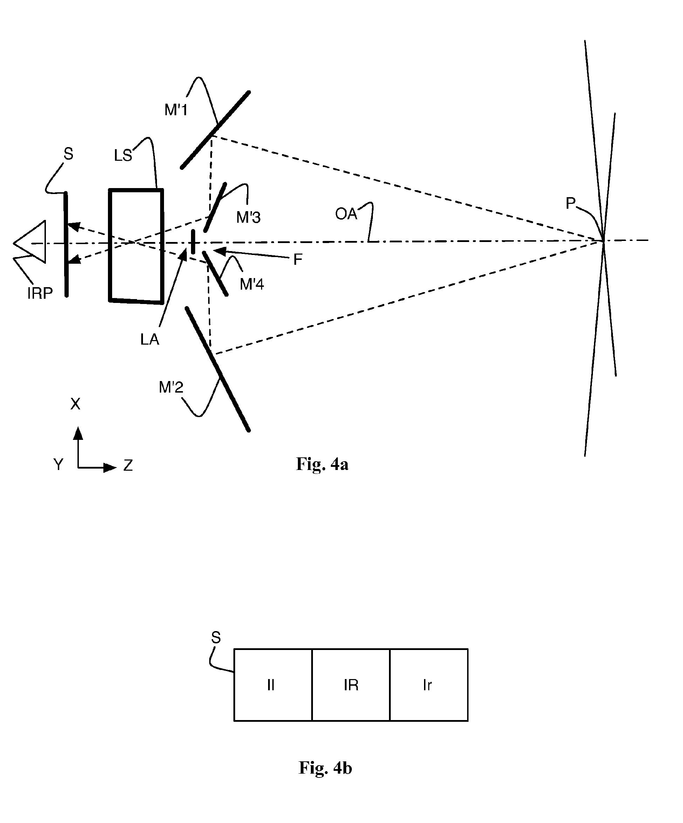

This device is particular as the mirrors M1, M2, M3 M4 are angularly adjusted so that the right Ir and left Il stereoscopic images are formed on the sensor not side by side as is usually the case (Fig. 1b) but in such a manner as to leave free an area IR between these two images (Fig. 4b).

Moreover, according to another characteristic of the device, a slot S is formed between the internal mirrors M3 and M4 to let past, on the one hand, a structured light emitted by a projector IRP and, on the other, a structured light once it has been reflected on the objects of the scene.

According to another characteristic, the device thus comprises an optic AL that is associated with the slot S1 and the lens system LS to form an image on said area IR from said reflected structured light.

Hence, when a stereoscopic image must be acquired by the device, the projector IRP emits a structured light for example of the infrared type. The right Ir and left Il images are typically formed on the sensor S via the external and internal mirrors. The structured light that is reflected on the objects of the scene, crosses the slot S1 and an infrared image is formed in the area IR.

According to an embodiment, the projector IRP is positioned in relation to the sensor S so that the interpolation that separates them does not have a horizontal component. Hence, the optical centres of the projector IRP and of the sensor S are contained on a straight line segment that has no horizontal component (along the X axis of the marker of the image plane).

According to a variant relative to the case where the structured light is of the infrared type, the device further comprises a blocking filter of the visible light to filter the reflected structured light.

According to a variant, the device also comprises an infrared blocking filter to filter the light that is intended to form the right and left images.

According to an embodiment of this last variant, these filters are of the dichroic type.

## Claims

1. Device for acquiring stereoscopic images comprising:
a sensor (S),
external (M1, M2) and internal (M3, M4) mirrors adjusted angularly to form right (Ir) and left (Il) stereoscopic images of a scene respectively on a first area and on a second area of a sensitive surface of the sensor (S) through a lens system (LS),
a projector (IRP) suitable to project a spatially structured light onto said scene, or suitable to project light pulses onto said scene,
an optic (AL) associated with the lens system (LS) for the formation, on a third area (IR) of the sensitive surface of said sensor (S), of an image of the scene coming from said projected light, said third area (IR) being inserted between said first area and said second area,
in the case of a projector suitable to project light pulses, measurement means, for each pixel of this captured image coming from said projected light, of the time shift between the departure of a light pulse from the projector and the return of this pulse onto said sensor,
means for calculating a depth map from this captured image, via said measures of time shifts for each pixel of this captured image in the event of projected light pulses,
**characterized in that** a slot (S1) is formed between the internal mirrors (M3, M4) to let pass, on the one hand, said light projected by the projector (IRP) onto the scene, and, on the other, the light needed to form the image of the scene coming from said light projected onto said third area (IR).

2. Device according to claim 1, **characterized in that** said first, second and third areas are not overlapping.

3. Device according to claim 1 or 2, **characterized in that** said optic (AL) associated with said lens system (LS) and the lens system (LS) have a common optical axis centred on said slot (S1) and on said third area (IR).

4. Device according to any one of claims 1 to 3, wherein said projector (IRP) is positioned in relation to the sensor (C) in such a manner that the straight line joining the centre of the third area and the intersection of the projection axis of said projector (IRP) with the plane of said sensitive surface of the sensor (S) does not have a horizontal component.

5. Device according to any one of claims 1 to 4, where the projected light is of the infrared type, that also comprises a blocking filter of the visible light that is positioned on the path of the light necessary to form the image of the scene coming from said light projected onto said third area (IR).

6. Device according to claim 5, which further comprises an infrared blocking filter that is positioned on the path of the light necessary to form the right and left stereoscopic images respectively on said first and second areas.

7. Device according to claim 6, wherein these filters are of the dichroic type.
